(19) Europäisches Patentamt

European Patent Office (11) Veröffentlichungsnummer: **0 312 754**
**B1**
Office européen des brevets

(12) **EUROPÄISCHE PATENTSCHRIFT**

(45) Veröffentlichungstag der Patentschrift:
**05.12.90**

(21) Anmeldenummer: **88114663.3**

(22) Anmeldetag: **08.09.88**

(51) Int. Cl.⁵: **C01B 3/38**, B01J 8/02

(54) **Reformer.**

(30) Priorität: **17.10.87 DE 3735192**

(43) Veröffentlichungstag der Anmeldung:
**26.04.89 Patentblatt 89/17**

(45) Bekanntmachung des Hinweises auf die Patenterteilung:
**05.12.90 Patentblatt 90/49**

(84) Benannte Vertragsstaaten:
**BE DE FR GB IT NL**

(56) Entgegenhaltungen:
**DE-C- 1 183 193**
**US-A- 2 788 265**

(73) Patentinhaber: **Uhde GmbH, Friedrich-Uhde-Strasse 15, D-4600 Dortmund 1(DE)**

(72) Erfinder: **Severin, Manfred, Dipl.-Ing., Am Wiesenberge 23, D-5840 Schwerte(DE)**
Erfinder: **Herbort, Hans-Joachim, Dipl.-Ing., Unnaerstrasse 65 B, D-5758 Fröndenberg(DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1(DE)**

## Beschreibung

Die Erfindung richtet sich auf einen Reformer, insbesondere auf einen autothermen Sekundärreformer, mit einer Misch- bzw. Reaktionskammer für das Gas und das Oxidationsmittel sowie mit einem Katalysatorbett und einer Sammelkammer für das reformierte Gas.

Reformer sind in unterschiedlichen Bauweisen bekannt, so zeigt die DE-A 2 841 127 eine weitverbreitete Konstruktion, bei der neben übereinander angeordneter Folge in einem Reformergefäß von oben nach unten ein aufwendiger Brenner, eine Misch- und Reaktionskammer, nachfolgend ein Katalysator und darunter eine Sammelkammer mit einem Traggewölbe für den Katalysator angeordnet sind. Eine günstigere Konstruktion zeigt die DE-A 1 542 539, da hier zentrisch von unten das zu behandelnde Gas zugeführt wird, womit sich insbesondere bei der Tragkonstruktion für den Katalysator Vorteile ergeben.

Insgesamt nachteilig ist bei den bekannten Reformerkonstruktionen der vergleichsweise hohe Bauaufwand zur Stützung des Katalysatorbettes. Dabei ist nicht unwesentlich, daß hier sehr hohe Temperaturen zu beherrschen sind mit den damit verbundenen besonderen baulichen Maßnahmen, wie Innenauskleidungen, Isolierungen, Berücksichtigung der thermischen Dehnungen und dgl. mehr. Da die heißen zu reformierenden Gase insbesondere bei Sekundärreformern aus dem Primärreformer mit einer vergleichsweise niedrigen Ebene angeliefert werden, sind Zuspeisungen dieser Gase von oben in die Reformer mit den damit verbundenen Umlenkungen, Rohrkrümmern und dgl. sehr aufwendig, diesen Nachteil vermeidet die bereits genannte DE-A 1 542 539, da sie die heißen Gase von unten in den Reformer zuspeist, diese allerdings innerhalb des Reformers noch nach oben bis in den Kopfbereich der Misch- bzw. Reaktionskammer leitet.

Aufgabe der Erfindung ist die Schaffung einer Lösung, mit der insbesondere der konstruktive und bauliche Aufwand derartiger Reformer verringert wird.

Diese Aufgabe wird bei einem Reformer der eingangs bezeichneten Art dadurch gelöst, daß die Misch- bzw. Reaktionskammer und das Katalysatorbett in liegender Anordnung im wesentlichen horizontal nebeneinander vorgesehen sind.

Die horizontale Anordnung von Mischkammer und Katalysatorbett bringt eine Fülle von Vorteilen mit sich. So kann ein liegender Reformer besonders einfach in der Zuspeisungsebene der heißen, zu reformierenden Gase angeordnet werden, in diesem Falle benötigt man Steigleitungen oder dgl. überhaupt nicht mehr. Ein wesentlicher Vorteil liegt aber auch darin, daß der Katalysator in jedem Falle in seiner Größe optimiert werden kann, da eine Verlängerung oder Verkürzung des zylindrischen Katalysatorraumes technisch keine Probleme aufwirft, was bei stehender Anordnung aber besondere Schwierigkeiten macht.

Die horizontale Anordnung des Katalysators macht auch große Katalysatorkapazitäten möglich bei geringen Druckverlusten, da die Schütthöhe des Katalysatorbettes bei Kapazitätsvergrößerung gleichbleibt, hier liegt die Vergrößerung allein in der längeren Katalysatorbettgestaltung. Bei stehender Anordnung würde es bei gleichbleibendem Querschnitt und höher werdendem Katalysatorbett zu erheblichen Druckverlusten kommen. Eine horizontale Anordnung eines Katalysatorbettes ist für sich gesehen aus der US-A 2 788 265 bekannt. Hier wird aber lediglich die vertikale Bauweise durch eine horizontale ersetzt, ohne daß die Gestaltung der Mischkammer dieser neuen Bauweise Rechnung trägt, wie dies bei der vorliegenden Erfindung der Fall ist.

In Ausgestaltung sieht die Erfindung vor, daß der Katalysatorraum eines im wesentlichen zylindrischen Reformerkörpers mit einem unteren, gasdurchlässigen Traggewölbe für eine Katalysatorschüttung ausgerüstet ist.

Wie eingangs bereits ausgeführt, sind Traggewölbe für sich gesehen bekannt, allerdings in anderer Gestaltung und Anordnung als dies bei der vorliegenden Erfindung der Fall ist. Hier kann bei zylindrischer Katalysatorkammer in deren unteren Bodenbereich eine Abzugsrinne als gasdurchlässiges Gewölbe gemauert sein, über der viel mehr Katalysatormaterial anhäufbar ist, als dies bei den bekannten Konstruktionen der Fall wäre. Auch diese Maßnahme trägt dazu bei, sich bei der Wahl der Größe des Katalysators, keine Beschränkungen zu unterwerfen.

Zweckmäßig ist es, die Trennwand zwischen Katalysatorraum und Reaktionskammer in Form einer Staumauer gewölbt auszubilden, wie dies die Erfindung ebenfalls vorsieht. Damit kann hinter dieser Staumauer eine große Menge an Katalysatormaterial angeordnet werden, selbst bei hohen Belastungen, insbesondere durch Wärme und dgl. hält eine derartige Konstruktion diesen Belastungen stand. Diesem Zweck dient auch eine weitere Ausgestaltung, die darin besteht, daß die Trennwand von unten nach oben gesehen sich verjüngend ausgebildet ist.

Um dafür zu sorgen, daß die statische Druckdifferenz über die gesamte Katalysatorschüttung möglichst gleichmäßig ist, ist vorgesehen, daß der Abzugstutzen für das reformierte Gas dem Überströmbereich über die Trennmauer gegenüberliegend unterhalb des Traggewölbes angeordnet ist.

Grundsätzlich sind symmetrische Anordnungen wegen der in der Regel einfacheren Bauweise erwünscht. Die liegende Bauweise des erfindungsgemäßen Reformers macht aber gerade auch asymmetrische Anordnungen von Bauteilen möglich, was beispielsweise zu Optimierungen der Strömungen der Gase führen kann.

So sieht eine zweckmäßige Ausgestaltungsvariante der Erfindung vor, daß die Zuführöffnungen für das Gas und das Oxidationsmittel exzentrisch angeordnet sind, z.B. ohne daß hierauf die Erfindung beschränkt wäre, ist der Zuführstutzen aus der Mitte nach unten auf einer Stirnseite des Reformers verlagert.

Zur Optimierung der Strömungsführung sieht die Erfindung darüber hinaus auch vor, daß die Oxidationsmittelzuführung aus einzelnen innerhalb der Gaszuführung angeordneten Zuführungslanzen gebildet ist, wobei es zweckmäßig sein kann, wenn am Auslaßende der Gaszuführung und/oder der Zuführlanzen für das Oxidationsmittel Düsen und/oder drallgebende Elemente vorgesehen sind.

Mit diesen Gestaltungen ist es möglich, in der Misch- bzw. Reaktionskammer für optimale Mischungsverhältnisse zu sorgen.

Darüber hinaus kann es zweckmäßig sein, neben Gas- und Oxidationsmittelzuführung eine Zuführung für weitere Gase vorzusehen, etwa für Erdgas, $CO_2$ oder dgl.

Die Erfindung ist nachstehend anhand der Zeichnung beispielsweise näher erläutert. Diese zeigt in

Fig. 1 den vereinfacht dargestellten Schnitt durch eine Ausführungsvariante des Reformers,

Fig. 2 einen Schnitt durch einen Reformer gemäß Linie II-II in Fig. 1 sowie in

Fig. 3 einen Querschnitt durch einen Reformer nach einer anderen Ausführungsvariante.

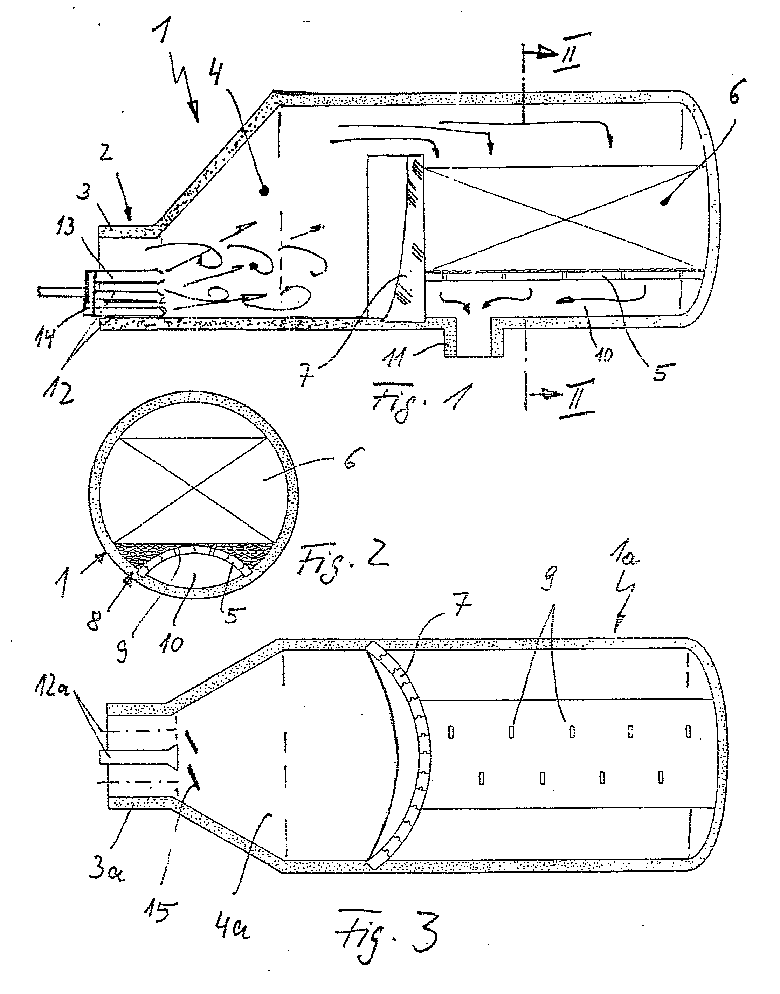

Der in Fig. 1 dargestellte, allgemein mit 1 bezeichnete Reformer weist eine seitliche Gaszuführung 2 auf, welche mit einer Isolierung 3 innen und außen versehen ist. Diese Gaszuführung 2 mündet in die mit 4 bezeichnete Misch- bzw. Reaktionskammer. Erkennbar ist das Gefäß des Reformers 1 liegend angeordnet, so daß seitlich neben der Misch- bzw. Reaktionskammer ein auf einem Stützgewölbe 5 angeordneter, allgemein mit 6 bezeichneter Katalysator vorgesehen ist.

Der Katalysator 6 kann beispielsweise aus einer Schüttung aus Katalysatorgranulat bestehen. Um ein Einfallen in die Misch- bzw. Reaktionskammer 4 zu verhindern, trennt eine sich nach oben verjüngende und in Form einer Staumauer gewölbt gestaltete Trennwand 7 diesen Bereich voneinander.

Wie sich insbesondere aus Fig. 2 ergibt, ist im mit 8 bezeichneten Bodenbereich des Reformers 1 unterhalb der Katalysatorschüttung 6 ein gasdurchlässiges Traggewölbe 5 angeordnet, wobei die Gasdurchlässigkeit im dargestellten Beispiel durch Schlitze 9 erreicht wird. Der so geschaffene Sammelraum 10 für das behandelte Gas ist mit einem Abzugsstutzen 11 ausgerüstet. Dieser Abzugsstutzen 11 ist in der Nähe der Trennwand 7 angeordnet, derart, daß das Katalysatorbett optimal durchströmbar ist.

In Fig. 3 ist eine exzentrische Anordnung der Gaszuführöffnung 3 dargestellt, die hier im Bodenbereich der Misch- bzw. Reaktionskammer 4 vorgesehen ist. Innerhalb dieser Gaszuführung 3 sind Lanzen 12 zur Zuführung des Oxidationsmittels angeordnet, diese Lanzen 12 können dabei konzentrisch am vollen Umfang innerhalb der Gaszuführung 3 angeordnet sein oder z.B., wie in Fig. 1 angedeutet, im unteren Halbbogen. Zusätzlich kann die Zuführung 13 eines weiteren Gases dort vorgesehen sein, der Oxidationsmittelverteiler 14 z.B., eine Ringkammer kann dabei ebenfalls mit einer weiteren Zumischmöglichkeit von Dampf oder dgl. ausgerüstet sein, was nicht näher dargestellt ist.

In Fig. 3 soll die völlig konzentrische Anordnung der Gaszuführöffnung 3a angedeutet sein, die Oxidationsmittelzuführungen 12a sind hier zum Teil nur strichpunktiert angegeben.

Angedeutet sind hier auch drallgebende Elemente 15, die nur symbolisch angedeutet sind und für eine optimale Strömungsführung in der Reaktionskammer 4a sorgen.

Natürlich sind die beschriebenen Ausführungsbeispiele der Erfindung noch in vielfacher Hinsicht abzuändern, ohne den Grundgedanken zu verlassen. So kann beispielsweise eine völlig symmetrische Bauweise des Katalysatorraumes 6 bzw. der Reaktionskammer 4 vorgesehen sein, derart, daß symmetrisch oder in ähnlicher Anordnung zum Abführstutzen 11 die Gaszuführung 3 mit den Oxidationsmittellanzen von unten kommend in diesen Raum eingeführt ist, hierfür könnte die Querschnittsform des Reformers 1 im unteren Auflagebereich horizontal ausgebildet sein, um die Zu- und Ableitstutzen einfacher gestalten zu können und dgl. mehr.

**Patentansprüche**

1. Reformer, insbesondere autothermer Sekundärreformer, mit einer Misch- bzw. Reaktionskammer für das Gas und das Oxidationsmittel sowie mit einem Katalysatorbett und einer Sammelkammer für das reformierte Gas,
dadurch gekennzeichnet,
daß die Misch- bzw. Reaktionskammer (4) und das Katalysatorbett (6) in liegender Anordnung im wesentlichen horizontal nebeneinander vorgesehen sind.

2. Reformer nach Anspruch 1,
dadurch gekennzeichnet,
daß der Katalysatorraum (6) eines im wesentlichen zylindrischen Reformerkörpers mit einem unteren, gasdurchlässigen Traggewölbe (5) für eine Katalysatorschüttung ausgerüstet ist.

3. Reformer nach Anspruch 2,
dadurch gekennzeichnet,
daß die Trennwand (7) zwischen Katalysator (6) und Reaktionskammer (4) in Form einer Staumauer gewölbt ausgebildet ist.

4. Reformer nach Anspruch 3,
dadurch gekennzeichnet,
daß die Trennwand (7) von unten nach oben gesehen sich verjüngend ausgebildet ist.

5. Reformer nach einem der vorangehenden Ansprüche,
dadurch gekennzeichnet,
daß der Abzugstutzen (11) für das reformierte Gas dem Überströmbereich über die Trennwand (7) gegenüberliegend unterhalb des Traggewölbes (5) angeordnet ist.

6. Reformer nach einem der vorangehenden Ansprüche,
dadurch gekennzeichnet,
daß die Zuführöffnungen (3,12) für das Gas und das Oxidationsmittel exzentrisch angeordnet sind.

7. Reformer nach einem der vorangehenden Ansprüche,
dadurch gekennzeichnet,
daß die Oxidationsmittelzuführung aus einzelnen innerhalb der Gaszuführung (3) angeordneten Zuführungslanzen (12) gebildet ist.

8. Reformer nach einem der vorangehenden Ansprüche,
dadurch gekennzeichnet,
daß am Auslaßende der Gaszuführung (3a) und/oder der Zuführlanzen für das Oxidationsmittel Düsen und/oder drallgebende Elemente (15) vorgesehen sind.

9. Reformer nach einem der vorangehenden Ansprüche,
dadurch gekennzeichnet,
daß neben Gas- und Oxidationsmittelzuführung (12) eine Zuführung (13) für weitere Gase vorgesehen ist.

## Claims

1. A reformer, in particular an autothermal secondary reformer, comprising a mixing or reaction chamber for the gas and the oxidation agent and a catalyst bed and a collecting chamber for the reformed gas, characterised in that the mixing or reaction chamber (4) and the catalyst bed (6) are disposed in a lying arrangement substantially horizontally in side-by-side relationship.

2. A reformer according to claim 1 characterised in that the catalyst chamber (6) of a substantially cylindrical reformer body is provided with a lower, gas-permeable support arch (5) for a catalyst fill.

3. A reformer according to claim 2 characterised in that the dividing wall (7) between the catalyst (6) and the reaction chamber (4) is of a curved configuration in the form of a dam wall.

4. A reformer according to claim 3 characterised in that the dividing wall (7) is of a reducing configuration in an upward direction.

5. A reformer according to one of the preceding claims characterised in that the outlet connection (11) for the reformed gas is arranged beneath the support arch (5) in opposite relationship to the region of flow over the dividing wall (7).

6. A reformer according to one of the preceding claims characterised in that the feed openings (3, 12) for the gas and the oxidation agent are arranged eccentrically.

7. A reformer according to one of the preceding claims characterised in that the oxidation agent feed means is formed from individual feed lances (12) arranged within the gas feed means (3).

8. A reformer according to one of the preceding claims characterised in that nozzles and/or swirl-producing elements (5) are provided at the outlet end of the gas feed means (3a) and/or the feed lances for the oxidation agent.

9. A reformer according to one of the preceding claims characterised in that a feed means (13) for further gases is provided beside the gas and oxidation agent feed means (12).

## Revendications

1. Appareil de reformage, notamment appareil de reformage secondaire autothermique, comprenant une chambre respective de mélange ou de réaction pour le gaz et l'agent d'oxydation, ainsi qu'un lit de catalyseur et une chambre collectrice du gaz reformé, caractérisé par le fait que la chambre respective (4) de mélange ou de réaction et le lit de catalyseur (6) sont prévus en une disposition couchée, pour l'essentiel avec juxtaposition horizontale.

2. Appareil de reformage selon la revendication 1, caractérisé par le fait que le compartiment catalytique (6) d'un corps de reformage substantiellement cylindrique est équipé, pour une masse de catalyseur en vrac, d'une voûte inférieure de support (5) perméable aux gaz.

3. Appareil de reformage selon la revendication 2, caractérisé par le fait que la cloison séparatrice (7) entre le catalyseur (6) et la chambre de réaction (4) est réalisée bombée, sous la forme d'un mur d'accumulation.

4. Appareil de reformage selon la revendication 3, caractérisé par le fait que la cloison séparatrice (7) est de réalisation rétrécie, observée de bas en haut.

5. Appareil de reformage selon l'une des revendications précédentes, caractérisé par le fait que le raccord (11) d'évacuation du gaz reformé est disposé au-dessous de la voûte de support (5), à l'opposé de la zone de débordement au-dessus de la cloison séparatrice (7).

6. Appareil de reformage selon l'une des revendications précédentes, caractérisé par le fait que les orifices (3, 12) d'arrivée du gaz et de l'agent d'oxydation sont ménagés excentriquement.

7. Appareil de reformage selon l'une des revendications précédentes, caractérisé par le fait que le système d'arrivée de l'agent d'oxydation est formé par des lances d'arrivée individuelles (12), logées à l'intérieur de l'arrivée de gaz (3).

8. Appareil de reformage selon l'une des revendications précédentes, caractérisé par le fait que des buses et/ou des éléments (15) à effet tourbillonnaire sont prévus à l'extrémité sortie de l'arrivée de gaz (3a) et/ou des lances d'arrivée de l'agent d'oxydation.

9. Appareil de reformage selon l'une des revendications précédentes, caractérisé par le fait qu'une arrivée (13) pour d'autres gaz est prévue en plus d'une arrivée du gaz et de l'agent d'oxydation (12).

Fig. 1

Fig. 2

Fig. 3